(19) Europäisches Patentamt
European Patent Office
Office européen des brevets

(11) **EP 3 411 948 B1**

(12) **EUROPÄISCHE PATENTSCHRIFT**

(45) Veröffentlichungstag und Bekanntmachung des Hinweises auf die Patenterteilung:
**29.03.2023 Patentblatt 2023/13**

(21) Anmeldenummer: **16823272.6**

(22) Anmeldetag: **21.12.2016**

(51) Internationale Patentklassifikation (IPC):
**H02P 21/26** $^{(2016.01)}$ **H02P 6/18** $^{(2006.01)}$

(52) Gemeinsame Patentklassifikation (CPC):
**H02P 6/183; H02P 21/26**

(86) Internationale Anmeldenummer:
**PCT/EP2016/082137**

(87) Internationale Veröffentlichungsnummer:
**WO 2017/133824 (10.08.2017 Gazette 2017/32)**

(54) **VERFAHREN, WINKELBESTIMMUNGSVORRICHTUNG UND STEUERVORRICHTUNG**

METHOD, ANGLE DETERMINATION APPARATUS AND CONTROL APPARATUS

PROCÉDÉ, DISPOSITIF DE DÉTERMINATION D'ANGLE ET DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2016 DE 102016201746**

(43) Veröffentlichungstag der Anmeldung:
**12.12.2018 Patentblatt 2018/50**

(73) Patentinhaber: **Robert Bosch GmbH**
**70442 Stuttgart (DE)**

(72) Erfinder:
• **GOETTING, Gunther**
**70499 Stuttgart (DE)**
• **CHEN, Lei**
**70435 Stuttgart (DE)**

(56) Entgegenhaltungen:
**WO-A1-2010/000343**

• **BOLOGNANI S ET AL: "Automatic tracking of MTPA trajectory in IPM motor drives based on AC current injection", ENERGY CONVERSION CONGRESS AND EXPOSITION, 2009. ECCE. IEEE, IEEE, PISCATAWAY, NJ, USA, 20. September 2009 (2009-09-20), Seiten 2340-2346, XP031887545, DOI: 10.1109/ECCE.2009.5316066 ISBN: 978-1-4244-2893-9**
• **SUNGMIN KIM ET AL: "Parameter independent maximum torque per ampere (MTPA) control of IPM machine based on signal injection", APPLIED POWER ELECTRONICS CONFERENCE AND EXPOSITION (APEC), 2010 TWENTY-FIFTH ANNUAL IEEE, IEEE, PISCATAWAY, NJ, USA, 21. Februar 2010 (2010-02-21), Seiten 103-108, XP031649885, ISBN: 978-1-4244-4782-4**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 411 948 B1

## Beschreibung

Die vorliegende Erfindung bezieht sich auf ein Verfahren und eine Winkelbestimmungsvorrichtung zum Bestimmen eines Rotorwinkels eines Rotors einer Elektromaschine. Ferner bezieht sich die Erfindung auf eine entsprechende Steuervorrichtung.

Stand der Technik

In modernen Fahrzeugen werden häufig Verbrennungsmotoren durch Elektromotoren ergänzt oder ersetzt. Als elektrische Antriebsmaschine in solchen Elektro- und Hybridfahrzeugen wird heutzutage häufig eine Permanent-Magnet Synchronmaschine (PMSM) wegen ihres hohen Wirkungsgrades und ihrer kleinen Bauform bzw. der hohen Leistungsdichte eingesetzt.

Die Regelung der PMSM erfolgt üblicherweise durch eine sogenannte feldorientierte Regelung. Dabei ist es notwendig, den aktuellen absoluten Rotorwinkel der PMSM in jedem Augenblick in hinreichender Genauigkeit zu kennen. Die Erfassung dieses Rotorwinkels erfolgt normalerweise mit einem Lagegeber (wie z.B. Resolver, Inkrementalgeber etc.). Alternativ kann der Rotorwinkel geberfrei erfasst werden, wobei in verschiedenen Drehzahlbereichen unterschiedliche Methoden zum Einsatz kommen können. Im Bereich mit mittlerer und hoher Drehzahl kann die sogenannte Back-EMF genutzt werden. Dabei werden die Grundschwingungsgrößen der Statorspannungen und -ströme als Eingangsgrößen für das Verfahren herangezogen und daraus die Rotorlage berechnet, ohne die Ansteuersignale zu beeinflussen. Beispielsweise zeigt die US 4 893 067 A ein Verfahren, bei welchem die Back-EMF genutzt wird, um die Motorlage zu bestimmen.

Im Stillstand und Bereich mit niedriger Drehzahl sind die Back-EMF basierten Verfahren wegen den geringen Spannungsgrößen nicht nutzbar. Es wird vielmehr ein Verfahren benötigt, das den Rotorwinkel unabhängig von der Drehzahl ermitteln kann.

In "Automatic Tracking of MTPA Trajectory in IPM Motor Drive Based on AC Current Injection" von S. Bolognani et al wird ein Verfahren zum Bestimmen einer MTPA Trajektorie eines Motors offenbart.

Die WO 2010 / 0 000 343 A1 zeigt ein Verfahren zum Bestimmen des

Betriebspunkts eines Motors.

In "Parameter Independent Maximum Torque per Ampere (MTPA) Control of IPM Machine Based on Signal Injection" von S. Kim et al. wird ein Signal entlang einer Drehmomentortskurve eingeprägt.

Offenbarung der Erfindung

Die vorliegende Erfindung offenbart ein Verfahren mit den Merkmalen des Patentanspruchs 1, eine Winkelbestimmungsvorrichtung mit den Merkmalen des Patentanspruchs 6 und eine Steuervorrichtung mit den Merkmalen des Patentanspruchs 8.

Demgemäß ist vorgesehen:
Ein Verfahren zum Bestimmen eines Rotorwinkels eines Rotors einer Elektromaschine, aufweisend die folgenden Schritte: Erzeugen eines drehmomentabhängigen Testsignals, welches von dem Drehmoment der Elektromaschine abhängt und eine höhere Frequenz aufweist, als ein Versorgungssignal für die Elektromaschine, Ansteuern der Elektromaschine mit einem Versorgungssignal und dem Testsignal, welches dem Versorgungssignal überlagert wird, Erfassen von Phasenströmen der Elektromaschine, und Bestimmen des Rotorwinkels des Rotors der Elektromaschine basierend auf den Auswirkungen des Testsignals auf die Phasenströme.

Ferner ist vorgesehen:
Eine Winkelbestimmungsvorrichtung zum Bestimmen eines Winkels eines Rotors einer Elektromaschine mit einem Verfahren nach einem der vorherigen Ansprüche, mit einem Signalerzeuger, der ein drehmomentabhängiges Testsignal, welches von dem Drehmoment der Elektromaschine abhängt und eine höhere Frequenz aufweist, als ein Versorgungssignal für die Elektromaschine, erzeugt und einem Versorgungssignal der Elektromaschine überlagert, und mit einem Regler, der dazu ausgebildet ist, den Rotorwinkel des Rotors der Elektromaschine basierend auf den Auswirkungen des Testsignals auf die Phasenströme der Elektromaschine zu bestimmen.

Schließlich ist vorgesehen:
Eine Steuervorrichtung für eine Elektromaschine, mit einer erfindungsgemäßen Winkelbestimmungsvorrichtung, und mit einer Steuereinrichtung, die ausgebildet ist, die Elektromaschine basierend auf einem vorgegebenen Solldrehmoment vektorbasiert anzusteuern.

Vorteile der Erfindung

Herkömmliche Verfahren, welche mithilfe von sinusförmigen oder rechteckigen Spannungstestsignalen oder Stromtestsignalen eine Information über die Rotorlage ermitteln, speisen alternierend in die geschätzte d-Richtung Testsignale ein.

Die der vorliegenden Erfindung zu Grunde liegende Erkenntnis besteht darin, dass bei solchen herkömmlichen Verfahren die hochfrequente Stromantwort bzw. der hochfrequente Teststrom zu einer großen Drehmomentwelligkeit und einer akustischen Störung führen. Ferner belastet die daraus entstehende große DC-Stromwelligkeit die Folienkondensatoren in dem Antriebssystem.

Um solche Störungen zu vermeiden sieht das erfindungsgemäße Verfahren ein alternierendes hochfrequentes (HF) drehmomentabhängiges Testsignal vor, welches z.B. sinusförmig oder rechteckig ausgebildet sein kann. Im Gegensatz zu den oben erwähnten Verfahren wird das Testsignal aber nicht in der geschätzten d-Achse eingespeist bzw. geregelt. Die Richtung des Testsignals wird vielmehr in Anhängigkeit von dem aktuellen Drehmoment der Elektromaschine so gewählt, dass die resultierende hochfrequente Schwingung des Motorstromzeigers das Drehmoment der Elektromaschine nur minimal beeinflusst.

Somit können sowohl die durch das Testsignal verursachte Drehmomentwelligkeit als auch die Stromwelligkeit im Zwischenkreis auf ein Minimum reduziert werden. Zudem zeigt das beschriebene Verfahren gegenüber den bekannten Verfahren auf dem Prüfstand eine deutlich geringere akustische Störung.

Vorteilhafte Ausführungsformen und Weiterbildungen ergeben sich aus den Unteransprüchen sowie aus der Beschreibung unter Bezugnahme auf die Figuren.

Erfindungsgemäß wird das drehmomentabhängige Testsignal als Testspannungsvektor in einem Spannungsvektorkoordinatensystem, auch kl-Koordinatensystem, mit einer ersten Achse, welche der Injektionsrichtung des Testsignals entspricht, auch k-Achse, und einer zweiten Achse, welche auf der ersten Achse senkrecht steht, auch l-Achse, erzeugt. Ferner weist der Spannungsvektor lediglich eine Komponente in der ersten Achse, also der k-Achse, auf und kann derart erzeugt werden, dass die Schwingung des Motorstromzeigers in dem rotorfesten Koordinatensystem, auch dq-Koordinatensystem, in etwa tangential zu einer dem von der Elektromaschine geforderten Drehmoment entsprechenden Drehmomenthöhenlinie liegt. Die Drehmomenthöhenlinie kennzeichnet dabei in dem rotorfesten Koordinatensystem alle Kombinationen von d-Achsen- und q-Achsenströmen, die in der Elektromaschine ein vorgegebenes Drehmoment einstellen.

Der Testspannungsvektor kann z.B. wie folgt dargestellt werden:

$$\begin{pmatrix} Usk, HF \\ Usl, HF \end{pmatrix} = V \begin{pmatrix} \sin(\omega t) \\ 0 \end{pmatrix}$$

Beim Erzeugen des Testspannungsvektors kann also ein Spannungstestsignal mit einer Drehwinkelgeschwindigkeit einer vorgegebenen Frequenz, die typischerweise im Bereich zwischen 500 Hz und 5 kHz liegt, erzeugt werden.

Ferner wird ein Transformationswinkel basierend auf den Steuerströmen für die Elektromaschine in dem rotorfesten Koordinatensystem bestimmt. Die Steuerströme im dq-Koordinatensystem entsprechen einem vorgegebenen Drehmoment. Der Transformationswinkel wird also basierend auf dem vorgegebenen Drehmoment bestimmt. Beispielsweise kann hierfür eine Look-Up-Tabelle vorgesehen sein.

Mit Hilfe des drehmomentabhängigen Transformationswinkels wird das Spannungstestsignal in das rotorfeste Koordinatensystem, also das dq-Koordinatensystem, transformiert. Das transformierte Spannungstestsignal wird dann dem Steuerspannungssignal für die Elektromaschine überlagert, um diese anzusteuern.

In einer Ausführungsform können beim Bestimmen des Rotorwinkels Phasenströme der Elektromaschine gemessen werden und basierend auf dem bestimmten Rotorwinkel in einen Motorstromvektor im rotorfesten Koordinatensystem transformiert werden, wobei der Motorstromvektor basierend auf dem Transformationswinkel in das Spannungsvektorkoordinatensystem transformiert werden kann. Auf Basis des Testsignals im Spannungsvektorkoordinatensystem, also dem Testspannungsvektor, kann der transformierte Motorstromvektor demoduliert werden. Es wird also der Rotorwinkel genutzt, der in einem späteren Schritt bestimmt wird. Es handelt sich folglich um eine geschlossene Regelschleife. Ein Startwert für den Rotorwinkel kann z.B. für die erste Iteration vorgegeben werden.

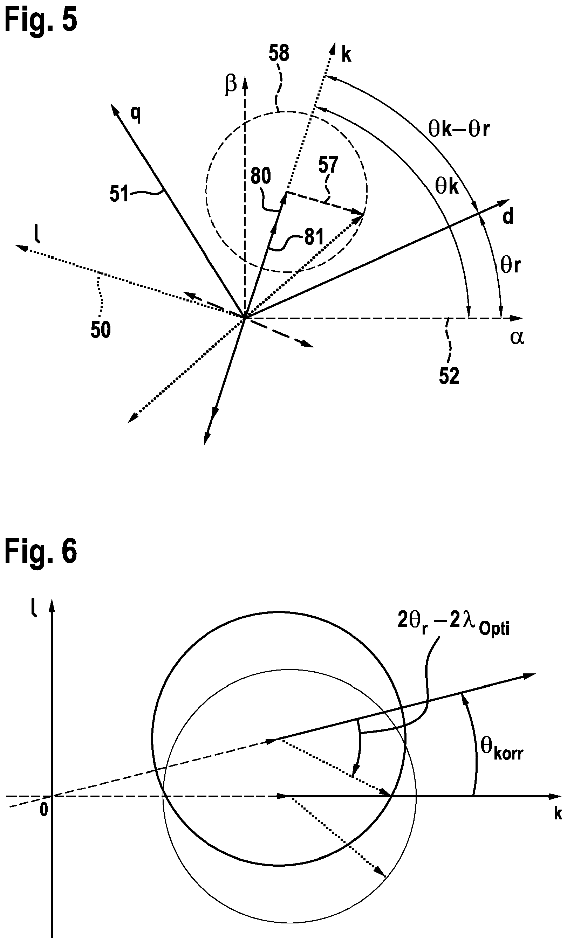

Die Richtung der Stromantwort auf das Testsignal in dem kl-Koordinatensystem hängt sowohl von der Rotorposition also auch von der Injektionsrichtung des Testsignals ab. Die Ortskurve der demodulierten Stromantwort in dem kl-Koordinatensystem ist ein Kreis, dessen Mittelpunkt auf der k-Achse liegt (siehe Fig. 5). Die Demodulation kann dabei z.B. mittels einer Cosinus-Funktion und anschließender Tiefpassfilterung erfolgen:

$$Tiefpass\{i\_sk\_hf * \cos(\omega t)\}$$
$$= -\frac{1}{\omega(L\_sd + L\_sq)}V + \frac{1}{\omega(L\_sd - L\_sq)}V$$
$$* \cos(2\theta\_r - 2\theta\_k)$$

$$Tiefpass\{i\_sl\_HF * \cos(\omega t)\} = \frac{1}{\omega(L\_sd - L\_sq)}V * \sin(2\theta\_r - 2\theta\_k)$$

L_xx bezeichnet dabei jeweils die Induktivität der Elektromaschine in der jeweiligen Achse, ω die Winkelgeschwindigkeit, Θ_r den Winkel des Rotors und Θ_k den Winkel der k-Achse gegenüber der α-Achse im statorfesten Koordinatensystem.

In einer Ausführungsform kann der demodulierte Motorstromvektor basierend auf einem Korrekturwinkel zum Ausgleich der Charakteristik der Elektromaschine in ein Regelkoordinatensystem transformiert werden. Ferner kann der Rotorwinkel in einem sog. "Tracking Observer" Regler derart bestimmt werden, dass der Betrag der Komponente des in das Regelkoordinatensystem transformierten Motorstromvektors, welche der zweiten Achse des Spannungsvektorkoordinatensystems entspricht, *Tiefpass*{*i_sl_HF* * cos(*ωt*)}, minimal, also null, wird.

Wird das Testsignal stets in Richtung des geschätzten Rotorwinkels $\theta\_k = \theta\_r$ eingespeist, ergibt sich die demodulierte Stromgröße auf der I-Achse wie folgt:

$$Tiefpass\{i\_sl\_HF * \cos(\omega t)\} = \frac{1}{\omega(L\_sd - L\_sq)}V * \sin(2\theta\_r - 2\hat{\theta}\_r)$$

Wird diese Größe zu null geregelt ist im eingeschwungenen Zustand $\hat{\theta}\_r = \hat{\theta}\_r$ gleich dem Transformationswinkel. Das heißt, die Injektionsrichtung folgt stets dem Rotorwinkel.

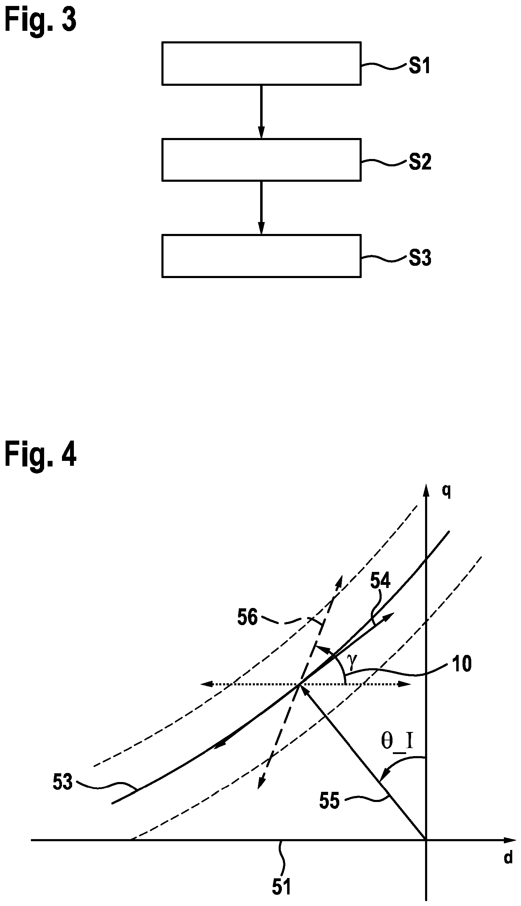

In dem hier beschrieben Verfahren wird das Testsignal wie bereits erwähnt statt in der geschätzten d-Richtung in Richtung eines Transformationswinkels eingeprägt. Das entsprechende Zeigerdiagramm ist in Fig. 4 bzw. Fig. 6 dargestellt. Die demodulierten Stromgrößen im kl-Koordinatensystem werden mithilfe des Winkels $\theta\_k$ korrigiert und dienen wieder als Eingang des "Tracking Observers", der den entsprechenden Rotorwinkel bestimmt und ausgibt.

Der Korrekturwinkel $\theta\_k$ ist wie der Transformationswinkel, auch Injektionswinkel, betriebspunktabhängig.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:

Fig. 1     ein Blockdiagramm einer Ausführungsform einer erfindungsgemäßen Winkelbestimmungsvorrichtung,

Fig. 2     ein Blockdiagramm einer weiteren Ausführungsform einer erfindungsgemäßen Winkelbestimmungsvorrichtung,

Fig. 3     ein Ablaufdiagramm einer Ausführungsform eines erfindungsgemäßen Verfahrens,

Fig. 4     ein dq-Diagramm zur Veranschaulichung der Ströme und Spannungen gemäß einer Ausführungsform der vorliegenden Erfindung,

Fig. 5     ein Diagramm zur Veranschaulichung der unterschiedlichen Koordinatensysteme gemäß der vorliegenden Erfindung,

Fig. 6     ein kl-Diagramm zur Veranschaulichung der Ströme und Spannungen gemäß einer Ausführungsform der vorliegenden Erfindung.

In allen Figuren sind gleiche bzw. funktionsgleiche Elemente und Vorrichtungen - sofern nichts Anderes angegeben ist - mit denselben Bezugszeichen versehen worden.

Ausführungsformen der Erfindung

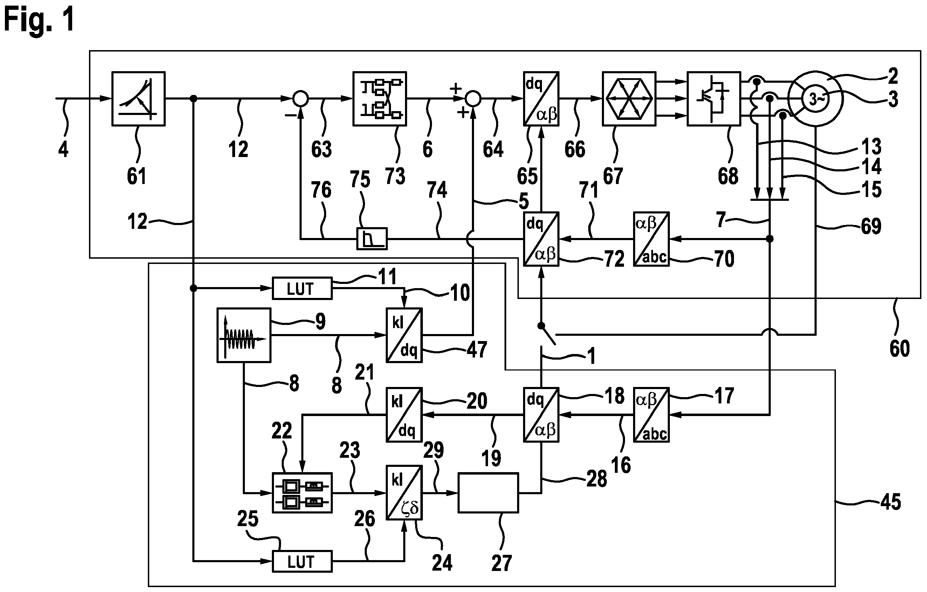

Fig. 1 zeigt ein Blockdiagramm einer Ausführungsform einer erfindungsgemäßen Winkelbestimmungsvorrichtung 45, die mit einer Steuereinrichtung 60 gekoppelt ist.

Die Winkelbestimmungsvorrichtung 45 weist einen Spannungsfunktionsgenerator 9 auf, der einen Testspannungsvektor 8 in einem Spannungsvektorkoordinatensystem 50, also dem kl-Koordinatensystem 50 (siehe Fig. 5), erzeugt. Der Testspannungsvektor 8 wird dabei derart erzeugt, dass er nur eine Komponente in der k-Achse aufweist. Beispielsweise kann der Testspannungsvektor 8 wie folgt definiert sein:

$$\begin{pmatrix} Usk, HF \\ Usl, HF \end{pmatrix} = V \begin{pmatrix} \sin(\omega t) \\ 0 \end{pmatrix}$$

Ferner wird ein Transformationsmodul 47 den Testspannungsvektor 8 basierend auf einem basierend auf einem Transformationswinkel 10 in das rotorfeste Koordinatensystem 51 (siehe Fig. 5) transformieren und als Testsignal 5 ausgeben.

Der Transformationswinkel 10 wird dabei aus einer Look-Up-Tabelle 11 ausgelesen, die basierend auf den Sollströmen 12 in dem rotorfesten Koordinatensystem 51 der Winkel derart bestimmt, dass der in dem rotorfesten Koordinatensystem 51 entstehende Stromvektor 54 tangential zu einer dem von der Elektromaschine 3 geforderten Drehmoment 4 entsprechenden Drehmomenthöhenlinie 53 (siehe Fig. 4) liegt.

Die Winkelbestimmungsvorrichtung 45 weist ferner ein erstes Transformationsmodul 17 auf, das erfasste Phasenströme 13, 14, 15 der Elektromaschine 3 bzw. einen entsprechenden Vektor 7 in einen Motorstromvektor 16 in einem statorfesten Koordinatensystem 52 transformiert. Ein zweites Transformationsmodul 18 transformiert diesen Motorstromvektor 16 basierend auf dem bestimmten Rotorwinkel 1 aus dem statorfesten Koordinatensystem 52 in das rotorfeste Koordinatensystem 51. Da der Rotorwinkel 1 hier genutzt wird, und der Ausgang des zweiten Transformationsmoduls 18 für dessen Berechnung genutzt wird, handelt es sich um eine geschlossene Regelschleife.

Der Motorstromvektor 19 wird mit Hilfe des oben bereits genutzten Transformationswinkels 10 mit einem vierten Transformationsmodul 20 aus dem rotorfesten Koordinatensystem 51 in das Spannungsvektorkoordinatensystem 50 transformiert. Ein Demodulator 22 demoduliert den Motorstromvektor 21 im Spannungsvektorkoordinatensystem 50 basierend auf dem Testspannungsvektor 8. Die Demodulation kann dabei z.B. mittels einer Cosinus-Funktion und anschließender Tiefpassfilterung erfolgen:

$$Tiefpass\{i\_sk\_HF * \cos(\omega t)\}$$
$$= -\frac{1}{\omega(L\_sd + L\_sq)}V + \frac{1}{\omega(L\_sd - L\_sq)}V$$
$$* \cos(2\theta\_r - 2\theta\_k)$$

$$Tiefpass\{i\_sl\_HF * \cos(\omega t)\} = \frac{1}{\omega(L\_sd - L\_sq)}V * \sin(2\theta\_r - 2\theta\_k)$$

Ein fünftes Transformationsmodul 24 transformiert den demodulierten Motorstromvektor 23 basierend auf einem Korrekturwinkel 26 zum Ausgleich der Charakteristik der Elektromaschine 3 in ein Regelkoordinatensystem. Der Korrekturwinkel 26 wird dabei ebenfalls von einer Look-Up-Tabelle 25 basierend auf den Sollströmen 12 bestimmt.

Die oben erwähnte geschlossene Regelschleife schließt sich über das Reglermodul 27, welches den Rotorwinkel 1 derart bestimmt, dass der Betrag der Komponente des in das Regelkoordinatensystem transformierten Motorstromvektors 29, welche der zweiten Achse i des Spannungsvektorkoordinatensystems (50) entspricht, minimal, also null, wird.

Diese Komponente kann auch dargestellt werden als:

$$Tiefpass\{i\_sl\_HF * \cos(\omega t)\} = \frac{1}{\omega(L\_sd \quad - L\_sq \quad)} V * \sin\big(2\theta\_r \quad - 2\hat{\theta}\_r\big)$$

Die Steuereinrichtung 60 erhält ein Soll-Drehmoment 4 für die Elektromaschine 2. Mithilfe des MPTC-Blocks 61 werden aus dem gewünschten Solldrehmoment 4 die entsprechenden Statorströme 12 bzw. Sollströme 12 in den rotorfesten Koordinaten 51 berechnet.

Gleichzeitig werden die tatsächlichen Phasenströmen 13, 14, 15 erfasst und über die Transformationsmodule 70, 72 erst in das statorfeste Koordinatensystem 52 und dann in das rotorfeste Koordinatensystem 51 transformiert. Mit Hilfe dieser transformierten Phasenströme 76 werden die Fehlerströme 63 ermittelt und als Eingangsgröße einem Stromregler 73 bereitgestellt.

Die von dem Stromregler 73 erzeugten Stellgrößen 6 in dem dq-Koordinatensystem bestehen aus fundamentalen niederfrequenten Ausgangsgrößen. Zu diesen wird das Testsignal 5 addiert, welches eine höhere Frequenz aufweist, die typischerweise zwischen 500 Hz und 5 kHz liegt. Die resultierende Summe bildet die Spannungssignale 64.

Nach der Berechnung der Spannungssignale 64 werden diese durch das Transformationsmodul 65 und den PWM-Regler 67 in Steuersignale für einen Inverter 68 gewandelt, der entsprechende Signale an den Klemmen der Elektromaschine 2 eingespeist.

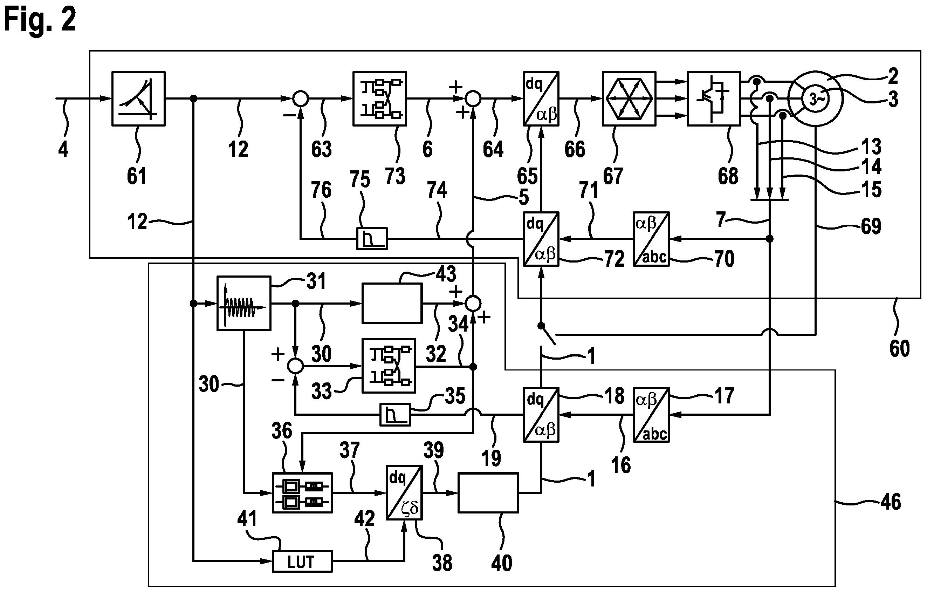

Fig. 2 zeigt ein Blockdiagramm einer weiteren Ausführungsform einer Winkelbestimmungsvorrichtung 46, die ebenfalls mit der Steuereinrichtung 60 gekoppelt ist.

Im Gegensatz zu Fig. 1 weist die Winkelbestimmungsvorrichtung 46 einen Stromfunktionsgenerator 31 auf, der einen Teststromvektor 30 mit einer Drehwinkelgeschwindigkeit einer vorgegebenen Frequenz im rotorfesten Koordinatensystem 51 erzeugt. Es wird also kein Testspannungsvektor 8 erzeugt.

Die Winkelbestimmungsvorrichtung 46 weist ebenfalls das erste Transformationsmodul 17 auf, das die erfassten Phasenströme 13, 14, 15 der Elektromaschine 3 bzw. einen entsprechenden Vektor 7 in einen Motorstromvektor 16 in dem statorfesten Koordinatensystem 52 transformiert. Ferner ist ebenfalls das zweite Transformationsmodul 18 vorgesehen, welches diesen Motorstromvektor 16 basierend auf dem bestimmten Rotorwinkel 1 aus dem statorfesten Koordinatensystem 52 in das rotorfeste Koordinatensystem 51 transformiert.

Bei der Ansteuerung einer Elektromaschine im Rahmen eins MTPC (Maximum Torque Per ampere Controller) wird bereits ein Stromvektor 12, auch fundamentaler Stromzeiger genannt, im dq-Koordinatensystem bestimmt, der senkrecht auf der entsprechenden Drehmomenthöhenlinie 53 steht. Damit ist basierend auf diesem fundamentalen Stromzeiger 12 sehr einfach möglich, einen entsprechenden Teststromvektor 30 zu erzeugen, der tangential zu der Drehmomenthöhenlinie 53 steht, und damit auch zu dem fundamentalen Stromzeiger 12.

Ein Feed Forward - Wandler 43 berechnet aus dem Teststromvektor 30 mithilfe der drehmomentabhängigen Maschinenparameter einen ersten Spannungsvektor 32. Ferner erzeugt ein Stromregler 33 basierend auf dem Teststromvektor 30 und dem hochpassgefilterten Motorstromvektor 19 im rotorfesten Koordinatensystem 51 einen zweiten Spannungsvektor 34. Die Summe aus erstem Spannungsvektor 32 und zweitem Spannungsvektor 34 wird als das Testsignal 5 ausgegeben.

Die Winkelbestimmungsvorrichtung 46 weist ferner einen Demodulator 36 auf, der den zweiten Spannungsvektor 34 basierend auf dem Teststromvektor 30 demoduliert. Dies kann analog zu dem oben beschriebenen geschehen.

Ein viertes Transformationsmodul 38 transformiert den zweiten Spannungsvektor 37 in ein Regelkoordinatensystem. Hierzu wird ebenfalls ein Korrekturwinkel 42 aus einer Look-Up-Tabelle 41 genutzt, der die Charakteristik der Elektromaschine 3 ausgleicht.

Anschließend bestimmt das Reglermodul 40 den Rotorwinkel 1 derart dass der Betrag des transformierten zweiten Spannungsvektors 39 zumindest in einer Achse des rotorfesten Koordinatensystems 51 minimal wird.

Fig. 3 zeigt ein Ablaufdiagramm einer Ausführungsform eines erfindungsgemäßen Verfahrens zum Bestimmen eines Rotorwinkels 1 eines Rotors 2 einer Elektromaschine 3.

In einem ersten Schritt S1 wird ein drehmomentabhängiges Testsignal 5 erzeugt, welches von dem Drehmoment 4 der Elektromaschine 3 abhängt und eine höhere Frequenz aufweist, als ein Versorgungssignal 6 für die Elektromaschine 3. Die Elektromaschine 3 wird daraufhin mit dem Versorgungssignal 6 und dem Testsignal 5 angesteuert, welches dem Versorgungssignal 6 überlagert wird. Schließlich werden Phasenströme 13, 14, 15 der Elektromaschine 3 erfasst, und der Rotorwinkel 1 des Rotors 2 der Elektromaschine 3 basierend auf den Auswirkungen des Testsignals 5 auf die Phasenströme 13, 14, 15 bestimmt.

Das drehmomentabhängige Testsignal 5 wird als Testspannungsvektor 5 in einem Spannungsvektorkoordinatensystem 50 erzeugt, welches eine erste Achse k, welche der Injektionsrichtung des Testsignals 5 entspricht, und eine zweite Achse l, welche auf der ersten Achse k senkrecht steht, aufweist.

Der Testspannungsvektor 5 weist dabei lediglich eine Komponente in der ersten Achse k auf und kann derart erzeugt werden, dass die Schwingungen der Phasenströme 13, 14, 15, also des Motorstromzeigers, in einem rotorfesten Koordinatensystem 51 in etwa tangential zu einer dem von der Elektromaschine 3 geforderten Drehmoment 4 entsprechenden Drehmomenthöhenlinie 53 liegen.

Zum Erzeugen des Testspannungsvektors 5 kann ein Spannungstestsignal 8 mit einer Drehwinkelgeschwindigkeit einer vorgegebenen Frequenz erzeugt werden. Ein Transformationswinkel 10 wird basierend auf Steuerströmen 12 der Elektromaschine 3 in dem rotorfesten Koordinatensystem 51 bestimmt und das Spannungstestsignal 8 wird basierend auf dem bestimmten Transformationswinkel 10 in das rotorfeste Koordinatensystem 51 transformiert.

Ferner können beim Bestimmen des Rotorwinkels 1 die Phasenströme 13, 14, 15 der Elektromaschine 3 gemessen werden und basierend auf dem bestimmten Rotorwinkel 1 in einen Motorstromvektor 19 im rotorfesten Koordinatensystem 51 transformiert werden. Dabei kann der Motorstromvektor 19 basierend auf dem Transformationswinkel 10 in das Spannungsvektorkoordinatensystem 50 transformiert werden. Ferner kann der transformierte Motorstromvektor 21 basierend auf dem Testsignal 8 im Spannungsvektorkoordinatensystem 50 demoduliert werden.

Schließlich kann der demodulierte Motorstromvektor 23 basierend auf einem Korrekturwinkel 26 zum Ausgleich der Charakteristik der Elektromaschine 3 in ein Regelkoordinatensystem transformiert werden und der Rotorwinkel 1 derart bestimmt werden, dass der Betrag der Komponente des in das Regelkoordinatensystem transformierten Motorstromvektors 23, welche der zweiten Achse l des Spannungsvektorkoordinatensystems 50 entspricht, minimal, also null, wird.

Eine weitere Möglichkeit ist es, anstelle eines Testspannungsvektors 8 einen Teststromvektor 30 mit einer Drehwinkelgeschwindigkeit einer vorgegebenen Frequenz im rotorfesten Koordinatensystem 51 zu erzeugen.

Ferner werden die Phasenströme 13, 14, 15 der Elektromaschine 3 erfasst und basierend auf dem bestimmten Rotorwinkel 1 in das rotorfeste Koordinatensystem 51 transformiert. Zusätzlich kann das drehmomentabhängige Testsignal 5 als Summe eines ersten basierend auf dem Teststromvektor 30 erzeugten Spannungsvektors 32 und eines zweiten basierend auf dem Teststromvektor 30 abzüglich der transformierten Phasenströme 13, 14, 15 geregelten zweiten Spannungsvektors 34 gebildet werden.

Der zweite Spannungsvektor 34 wird danach basierend auf dem Teststromvektor 30 demoduliert, wobei der demodulierte zweite Spannungsvektor 37 basierend auf einem Korrekturwinkel 42 zum Ausgleich der Charakteristik der Elektromaschine 3 in ein Regelkoordinatensystem transformiert wird.

Der Rotorwinkel 1 kann dann derart bestimmt werden, dass der Betrag des transformierten Spannungsvektors 39 zumindest in einer Achse des rotorfesten Koordinatensystems 51 minimal wird.

Fig. 4 zeigt ein dq-Diagramm, welches das rotorfeste Koordinatensystem 51 der Elektromaschine 2 darstellt. In dem dq-Diagramm 51 ist eine Höhenlinie 53 eingezeichnet, die die Drehmomentlinie für ein gegebenes Soll-Drehmoment darstellt. Die d-Achsen bzw. q-Achsenströme, deren Vektoren auf der Höhenlinie 53 liegen, erzeugen also alle das gleiche Drehmoment. Ferner ist ein Vektor 55 dargestellt, der von dem Ursprung des dq-Diagramms zu der Höhenlinie 53 verläuft, wobei der Vektor 55 senkrecht auf der Höhenlinie 53 steht. Am Ende des Vektors 55 ist der Stromvektor 54 tangential zu der Höhenlinie 53 dargestellt.

Dieser Stromvektor 54 ist derjenige Stromvektor, der sich ergeben soll, wenn das Testsignal 5 dem Steuersignal 6 für die Elektromaschine 2 überlagert wird. Es ist zu erkennen, dass ein solcher Stromvektor das Drehmoment wesentlich weniger verändert, als der gepunktet dargestellte Stromvektor, der parallel zur d-Achse liegt und bei herkömmlichen Verfahren genutzt wird. Gestrichelt ist ferner noch der Spannungsvektor 56 dargestellt, der in die Elektromaschine 2 eingespeist werden muss, um den Stromvektor 54 zu erzeugen. Dabei ist der Spannungsvektor 56 um den Transformationswinkel 10 = γ gegenüber dem gepunktet dargestellte Stromvektor verschoben.

Fig. 5 zeigt ein Diagramm zur Veranschaulichung der unterschiedlichen Koordinatensysteme gemäß der vorliegenden Erfindung.

Mit einer horizontalen Achse α und einer vertikalen Achse β gestrichelt dargestellt ist das statorfeste Koordinatensystem 52. Mit durchgezogenen Linien dargestellt sind die Achsen d und q des dq-Koordinatensystems 51. Dabei ist das dq-Koordinatensystem 51 um einen Winkel Θr gegenüber dem statorfesten Koordinatensystem 52 gedreht, dieser Winkel entspricht also dem Rotorwinkel 1. Es versteht sich, dass der Winkel Θr sich mit der Drehung des Stators 3 der Elektromaschine 2 verändert. Das Diagramm der Fig. 5 ist also lediglich eine Momentaufnahme. Ferner ist mit gepunkteten Achsen k und l das Spannungsvektorkoordinatensystem 50 dargestellt, welches gegenüber dem statorfesten Koordinatensystem 52 um den Winkel Θk gedreht ist.

Die k-Achse entspricht dabei der Injektionsrichtung des Testsignals 5, als Stromvektor 80 oder Spannungsvektor 81 dargestellt. Die Ortskurve der demodulierten Stromantwort 57 in den kl-Koordinaten ist ein Kreis 58, dessen Mittelpunkt auf der k-Achse liegt. Die Demodulation kann, wie oben bereits beschrieben, mittels einer Cosinus-Funktion und anschließender Tiefpassfilterung erfolgen.

Fig. 6 zeigt ein kl-Diagramm zur Veranschaulichung der Ströme und Spannungen gemäß einer Ausführungsform der vorliegenden Erfindung.

Wie oben bereits erwähnt, wird mithilfe eines sogenannten "Tracking Observer" Reglers 27, 40 der Betrag der Komponente des Motorstromvektors 29, welche der zweiten Achse i des Spannungsvektorkoordinatensystems 50 entspricht, derart geregelt, dass diese minimal, also null, wird:

$$Tiefpass\{i\_sl\ ,HF * \cos(\omega t)\} = 0 = \frac{1}{\omega(L\_sd\ -L\_sq\ )}V * \sin\left(2\theta\_r\ -\ 2\hat{\theta}\_r\right)$$

Dadurch ergibt sich im eingeschwungenen Zustand $\theta_r = \hat{\theta}\_r$. Das heißt, die Injektionsrichtung folgt stets dem Rotorwinkel.

Das Zeigerdiagramm der Fig. 6 ergibt sich, also, wenn das Testsignal statt in der geschätzten d-Richtung in Richtung des Transformationswinkel 10 eingeprägt wird. Die demodulierten Stromgrößen im kl-System werden dann mithilfe des Korrekturwinkels 26, 42 = Θkorr korrigiert und dienen wieder als Eingang des "Tracking Observer" Reglers 27, 40. Der Korrekturwinkel 26, 42 ist wie der optimale

Injektionswinkel bzw. Transformationswinkel 10 betriebspunktabhängig und kann im Voraus z.B. experimentell oder rechnerisch bestimmt werden.

**Patentansprüche**

1. Verfahren zum Bestimmen eines Rotorwinkels (1) eines Rotors (2) einer Elektromaschine (3), aufweisend die Schritte:

   Erzeugen (S1) eines drehmomentabhängigen Testsignals (5), welches von dem Drehmoment (4) der Elektromaschine (3) abhängt und eine höhere Frequenz aufweist, als ein Versorgungssignal (6) für die Elektromaschine (3),
   Ansteuern der Elektromaschine (3) mit dem Versorgungssignal (6), welches einer von einem Stromregler (73) erzeugten Stellgröße (6) in einem dq-Koordinatensystem entspricht, und dem Testsignal (5), welches dem Versorgungssignal (6) überlagert wird,
   Erfassen von Phasenströmen (13, 14, 15) der Elektromaschine (3), und
   Bestimmen des Rotorwinkels (1) des Rotors (2) der Elektromaschine (3) basierend auf den Auswirkungen des Testsignals (5) auf die Phasenströme (13, 14, 15)
   **dadurch gekennzeichnet, dass** das Verfahren die weiteren Schritte umfasst:

   Transformieren der erfassten Phasenströme (13, 14, 15) der Elektromaschine (3) in einen Motorstromvektor (16) in einem statorfesten Koordinatensystem (52) mittels einem ersten Transformationsmodul (17);
   Transformieren des Motorstromvektors (16) basierend auf dem bestimmten Rotorwinkel (1) aus dem statorfesten Koordinatensystem (52) in das rotorfeste Koordinatensystem (51) mittels eines zweiten Transformationsmoduls (18);
   Erzeugen eines Testspannungsvektors (8) in einem Spannungsvektorkoordinatensystem (50) mit einer ersten Achse (k), welche der Injektionsrichtung des Testsignals (5) entspricht, und einer zweiten Achse (l), welche auf der ersten Achse (k) senkrecht steht, derart, dass dieser nur eine Komponente in der ersten Achse (k) aufweist mittels eines Spannungsfunktionsgenerators (9);
   Transformieren des Testspannungsvektor (8), basierend auf einem, basierend auf den Sollströmen (12) in dem rotorfesten Koordinatensystem (51) bestimmten, Transformationswinkel (10), in das rotorfeste Koordinatensystem (51) und
   Ausgeben des transformierten Testspannungsvektors (8) als Testsignal (5), mittels eines dritten Transformationsmodul (47);
   wobei das Überlagern des Versorgungssignal (6) mit dem Testsignal (5) mittels einer Addition des Versorgungssignals (6) und des Testsignals (5) erfolgt.

2. Verfahren nach Anspruch 1,
   wobei der Testspannungsvektor (8) lediglich eine Komponente in der ersten Achse (k) aufweist und derart erzeugt wird, dass die Schwingung der Phasenströme (13, 14, 15) in einem rotorfesten Koordinatensystem (51) in etwa tangential zu einer dem von der Elektromaschine (3) geforderten Drehmoment (4) entsprechenden Drehmomenthöhenlinie (53) liegt.

3. Verfahren nach Anspruch 2, wobei zum Erzeugen des Testspannungsvektors (8) ein Spannungstestsignal mit einer Drehwinkelgeschwindigkeit einer vorgegebenen Frequenz, insbesondere zwischen 100 Hz und 10 kHz, erzeugt wird,

4. Verfahren nach Anspruch 3, wobei beim Bestimmen des Rotorwinkels (1) Phasenströme (13, 14, 15) der Elektromaschine (3) gemessen werden und basierend auf dem bestimmten Rotorwinkel (1) in einen Motorstromvektor (19)

im rotorfesten Koordinatensystem (51) transformiert werden,

wobei der Motorstromvektor (19) basierend auf dem Transformationswinkel (10) in das Spannungsvektorkoordinatensystem (50) transformiert wird, und
wobei der transformierte Motorstromvektor (21) basierend auf dem Testsignal (8) im Spannungsvektorkoordinatensystem (50) demoduliert wird.

5. Verfahren nach Anspruch 4, wobei der demodulierte Motorstromvektor (23) basierend auf einem Korrekturwinkel (26) zum Ausgleich der Charakteristik der Elektromaschine (3) in ein Regelkoordinatensystem transformiert wird, und wobei der Rotorwinkel (1) derart bestimmt wird, dass der Betrag der Komponente des in das Regelkoordinatensystem transformierten Motorstromvektors (23), welche der zweiten Achse (l) des Spannungsvektorkoordinatensystems (50) entspricht, minimal wird.

6. Winkelbestimmungsvorrichtung (45, 46), eingerichtet zum Bestimmen eines Winkels (1) eines Rotors (2) einer Elektromaschine (3) mit einem Verfahren nach einem der vorherigen Ansprüche,

mit einem Signalerzeuger (9, 47; 31), der ein drehmomentabhängiges Testsignal (5), welches von dem Drehmoment (4) der Elektromaschine (3) abhängt und eine höhere Frequenz aufweist, als ein Versorgungssignal (6) für die Elektromaschine, (3) erzeugt und einem Versorgungssignal (6) der Elektromaschine (3) überlagert, und
mit einem Regler (27; 40) , der dazu ausgebildet ist, den Rotorwinkel (1) des Rotors (2) der Elektromaschine (3) basierend auf den Auswirkungen des Testsignals (5) auf die Phasenströme (13, 14, 15) der Elektromaschine (3) zu bestimmen.

7. Winkelbestimmungsvorrichtung (45, 46) nach Anspruch 6,

mit einem vierten Transformationsmodul (20), das ausgebildet ist, den Motorstromvektor (19) aus dem rotorfesten Koordinatensystem (51) basierend auf dem Transformationswinkel (10) in das Spannungsvektorkoordinatensystem (50) zu transformieren,
mit einem Demodulator (22), der dazu ausgebildet ist, den Motorstromvektor (21) im Spannungsvektorkoordinatensystem (50) basierend auf dem Testspannungsvektor (8) zu demodulieren,
mit einem fünften Transformationsmodul (24), das dazu ausgebildet ist den demodulierten Motorstromvektor (23) basierend auf einem Korrekturwinkel (26) zum Ausgleich der Charakteristik der Elektromaschine (3) in ein Regelkoordinatensystem zu transformieren, und
mit einem Reglermodul (27), das dazu ausgebildet ist, den Rotorwinkel (1) derart zu bestimmen, dass der Betrag der Komponente des in das Regelkoordinatensystem transformierten Motorstromvektors (29), welche der zweiten Achse (l) des Spannungsvektorkoordinatensystems entspricht, minimal wird.

8. Steuervorrichtung für eine Elektromaschine (3),

mit einer Winkelbestimmungsvorrichtung (45, 46) nach einem der Ansprüche 6 bis 7,
mit einer Steuereinrichtung (60), die ausgebildet ist, die Elektromaschine (3) basierend auf einem vorgegebenen Solldrehmoment (4) vektorbasiert anzusteuern.

## Claims

1. Method for determining a rotor angle (1) of a rotor (2) of an electric machine (3), having the following steps:

generating (S1) a torque-dependent test signal (5) that depends on the torque (4) of the electric machine (3) and has a higher frequency than a supply signal (6) for the electric machine (3),
driving the electric machine (3) with the supply signal (6), which corresponds to a manipulated variable (6) generated by a current controller (73) in a dq coordinate system, and with the test signal (5) which is superimposed on the supply signal (6),
capturing phase currents (13, 14, 15) of the electric machine (3), and
determining the rotor angle (1) of the rotor (2) of the electric machine (3) on the basis of the effects of the test signal (5) on the phase currents (13, 14, 15),
**characterized in that** the method comprises the following further steps:

transforming the captured phase currents (13, 14, 15) of the electric machine (3) into a motor-current vector (16) in a stator-fixed coordinate system (52) by means of a first transformation module (17);

transforming the motor-current vector (16) from the stator-fixed coordinate system (52) into the rotor-fixed coordinate system (51) on the basis of the determined rotor angle (1) by means of a second transformation module (18);

generating a test-voltage vector (8) in a voltage-vector coordinate system (50) with a first axis (k), which corresponds to the direction of injection of the test signal (5), and a second axis (1), which is perpendicular to the first axis (k), in such a manner that said vector has only one component in the first axis (k), by means of a voltage function generator (9);

transforming the test-voltage vector (8) into the rotor-fixed coordinate system (51) on the basis of a transformation angle (10) determined on the basis of the set currents (12) in the rotor-fixed coordinate system (51), and outputting the transformed test-voltage vector (8) as a test signal (5), by means of a third transformation module (47);

wherein the test signal (5) is superimposed on the supply signal (6) by adding the supply signal (6) and the test signal (5).

2.  Method according to Claim 1,
    wherein the test-voltage vector (8) has only one component in the first axis (k) and is generated in such a manner that the oscillation of the phase currents (13, 14, 15) in a rotor-fixed coordinate system (51) is approximately tangential to a torque contour line (53) corresponding to the torque (4) demanded by the electric machine (3).

3.  Method according to Claim 2, wherein for the purpose of generating the test-voltage vector (8) a voltage test signal is generated having a rotational angular velocity of a predetermined frequency, in particular between 100 Hz and 10 kHz.

4.  Method according to Claim 3, wherein when the rotor angle (1) is being determined phase currents (13, 14, 15) of the electric machine (3) are measured and are transformed into a motor-current vector (19) in the rotor-fixed coordinate system (51) on the basis of the determined rotor angle (1),

    wherein the motor-current vector (19) is transformed into the voltage-vector coordinate system (50) on the basis of the transformation angle (10), and
    wherein the transformed motor-current vector (21) is demodulated in the voltage-vector coordinate system (50) on the basis of the test signal (8).

5.  Method according to Claim 4, wherein the demodulated motor-current vector (23) is transformed into a control coordinate system on the basis of a correction angle (26) for compensating for the characteristic of the electric machine (3), and
    wherein the rotor angle (1) is determined in such a manner that the magnitude of the component of the motor-current vector (23) transformed into the control coordinate system that corresponds to the second axis (1) of the voltage-vector coordinate system (50) becomes minimal.

6.  Angle-determination apparatus (45, 46) configured to determine an angle (1) of a rotor (2) of an electric machine (3) with a method according to one of the preceding claims,

    with a signal generator (9, 47; 31) which generates a torque-dependent test signal (5) that depends on the torque (4) of the electric machine (3) and has a higher frequency than a supply signal (6) for the electric machine (3), and superimposes said test signal on a supply signal (6) of the electric machine (3), and
    with a controller (27; 40) which is designed to determine the rotor angle (1) of the rotor (2) of the electric machine (3) on the basis of the effects of the test signal (5) on the phase currents (13, 14, 15) of the electric machine (3).

7.  Angle-determination apparatus (45, 46) according to Claim 6,

    with a fourth transformation module (20) which is designed to transform the motor-current vector (19) from the rotor-fixed coordinate system (51) into the voltage-vector coordinate system (50) on the basis of the transformation angle (10),
    with a demodulator (22) which is designed to demodulate the motor-current vector (21) in the voltage-vector coordinate system (50) on the basis of the test-voltage vector (8),
    with a fifth transformation module (24) which is designed to transform the demodulated motor-current vector (23) into a control coordinate system on the basis of a correction angle (26) for compensating for the characteristic of the electric machine (3), and

with a controller module (27) which is designed to determine the rotor angle (1) in such a manner that the magnitude of the component of the motor-current vector (29) transformed into the control coordinate system that corresponds to the second axis (1) of the voltage-vector coordinate system becomes minimal.

8. Control apparatus for an electric machine (3),

with an angle-determination apparatus (45, 46) according to one of Claims 6 to 7,
with a control device (60) which is designed to drive the electric machine (3) in a vector-based manner on the basis of a predetermined set torque (4).

**Revendications**

1. Procédé de détermination d'un angle de rotor (1) d'un rotor (2) d'une machine électrique (3), ledit procédé comprenant les étapes suivantes :

générer (SI) un signal de test (5), dépendant du couple, qui dépend du couple (4) de la machine électrique (3) et qui a une fréquence supérieure à celle d'un signal d'alimentation (6) de la machine électrique (3),
commander la machine électrique (3) avec le signal d'alimentation (6), qui correspond dans un système de coordonnées dq à une grandeur de réglage (6) générée par un régulateur de courant (73), et avec le signal de test (5) qui est superposé au signal d'alimentation (6),
détecter des courants de phase (13, 14, 15) de la machine électrique (3), et
déterminer l'angle de rotor (1) du rotor (2) de la machine électrique (3) sur la base des effets du signal de test (5) sur les courants de phase (13, 14, 15),
**caractérisé en ce que** le procédé comprend les étapes supplémentaires suivantes :

transformer les courants de phase détectés (13, 14, 15) de la machine électrique (3) en un vecteur de courant moteur (16) dans un système de coordonnées (52), fixe par rapport au stator, au moyen d'un premier module de transformation (17) ;
transformer le vecteur de courant de moteur (16) sur la base de l'angle de rotor déterminé (1) dans le système de coordonnées (52), fixe par rapport au stator, au système de coordonnées (51), fixe par rapport au rotor, au moyen d'un deuxième module de transformation (18) ;
générer un vecteur de tension de test (8) dans un système de coordonnées de vecteur de tension (50) comprenant un premier axe (k), qui correspond à la direction d'injection du signal de test (5), et un deuxième axe (I), qui est perpendiculaire au premier axe (k), de manière à ce que celui-ci n'ait qu'une seule composante dans le premier axe (k) au moyen d'un générateur de fonction de tension (9) ;
transformer le vecteur de tension de test (8) sur la base d'un angle de transformation (10) qui est déterminé sur la base des courants de consigne (12) dans le système de coordonnées (51), fixe par rapport au rotor, dans le système de coordonnées (51), fixe par rapport au rotor, et
délivrer en sortie le vecteur de tension de test transformé (8) en tant que signal de test (5) au moyen d'un troisième module de transformation (47) ;
la superposition du signal d'alimentation (6) au signal de test (5) étant effectuée par addition du signal d'alimentation (6) et du signal de test (5).

2. Procédé selon la revendication 1,
le vecteur de tension de test (8) n'ayant qu'une composante dans le premier axe (k) et étant généré de manière à ce que l'oscillation des courants de phase (13, 14, 15) dans un système de coordonnées (51), fixe par rapport au rotor, soit à peu près tangente à une ligne de niveau de couple (53) qui correspond au couple (4) requis par la machine électrique (3).

3. Procédé selon la revendication 2, un signal de test de tension étant généré avec une vitesse d'angle de rotation d'une fréquence spécifiée, en particulier entre 100 Hz et 10 kHz, afin de générer le vecteur de tension de test (8).

4. Procédé selon la revendication 3, des courants de phase (13, 14, 15) de la machine électrique (3) étant mesurés lors de la détermination de l'angle de rotor (1) et étant transformés, sur la base de l'angle de rotor déterminé (1), en un vecteur de courant de moteur (19) dans le système de coordonnées (51), fixe par rapport au rotor,

le vecteur de courant de moteur (19) étant transformé dans le système de coordonnées de vecteur de tension (50) sur la base de l'angle de transformation (10), et le vecteur de courant de moteur transformé (21) étant démodulé sur la base du signal de test (8) dans le système de coordonnées de vecteur de tension (50).

5. Procédé selon la revendication 4, le vecteur de courant de moteur démodulé (23) étant transformé dans un système de coordonnées de régulation sur la base d'un angle de correction (26) afin de compenser les caractéristiques de la machine électrique (3), et l'angle du rotor (1) étant déterminé de manière à ce que la valeur absolue de la composante du vecteur de courant de moteur (23) transformé dans le système de coordonnées de régulation, laquelle composante correspond au deuxième axe (I) du système de coordonnées de vecteur tension (50), devient minimal.

6. Dispositif de détermination d'angle (45, 46), conçu pour déterminer un angle (1) d'un rotor (2) d'une machine électrique (3) à l'aide d'un procédé selon l'une des revendications précédentes, ledit dispositif comprenant

   un générateur de signal (9, 47 ; 31) qui génère un signal de test (5), dépendant du couple, qui dépend du couple (4) de la machine électrique (3) et qui a une fréquence supérieure à celle d'un signal d'alimentation (6) de la machine électrique (3), et le superpose à un signal d'alimentation (6) de la machine électrique (3), et
   un régulateur (27 ; 40) qui est conçu pour déterminer l'angle de rotor (1) du rotor (2) de la machine électrique (3) sur la base des effets du signal de test (5) sur les courants de phase (13, 14, 15) de la machine électrique (3).

7. Dispositif de détermination d'angle (45, 46) selon la revendication 6, ledit dispositif comprenant

   un quatrième module de transformation (20) qui est conçu pour transformer le vecteur de courant de moteur (19) du système de coordonnées (51), fixe par rapport au rotor, sur la base de l'angle de transformation (10) dans le système de coordonnées de vecteur de tension (50),
   un démodulateur (22) qui est conçu pour démoduler le vecteur de courant de moteur (21) dans le système de coordonnées de vecteur de tension (50) sur la base du vecteur de tension de test (8),
   un cinquième module de transformation (24) qui est conçu pour transformer le vecteur de courant de moteur démodulé (23) sur la base d'un angle de correction (26) afin de compenser les caractéristiques de la machine électrique (3) dans un système de coordonnées de régulation, et
   un module de régulation (27) qui est conçu pour déterminer l'angle de rotor (1) de manière à ce que la valeur absolue de la composante du vecteur de courant de moteur (29), transformé dans le système de coordonnées de régulation, laquelle composante correspond au deuxième axe (I) du système de coordonnées de vecteur de tension, devient minimal.

8. Dispositif de commande d'une machine électrique (3), ledit dispositif comprenant

   un dispositif de détermination d'angle (45, 46) selon l'une des revendications 6 à 7,
   un module de commande (60) qui est conçu pour commander la machine électrique (3) de manière vectorielle sur la base d'un couple de consigne spécifié (4).

**Fig. 1**

EP 3 411 948 B1

**Fig. 2**

## Fig. 3

## Fig. 4

## Fig. 5

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4893067 A

- WO 20100000343 A1

**In der Beschreibung aufgeführte Nicht-Patentliteratur**

- **S. BOLOGNANI.** *Automatic Tracking of MTPA Trajectory in IPM Motor Drive Based on AC Current Injection*

- **S. KIM.** *Parameter Independent Maximum Torque per Ampere (MTPA) Control of IPM Machine Based on Signal Injection*